(19) Europäisches Patentamt

European Patent Office

Office européen des brevets

(11) Veröffentlichungsnummer: **0 669 079 A1**

## (12) EUROPÄISCHE PATENTANMELDUNG

(21) Anmeldenummer: **95101553.6**

(22) Anmeldetag: **06.02.95**

(51) Int. Cl.⁶: **A01N 25/14**, A01N 63/00, A01N 63/04

(30) Priorität: **15.02.94 DE 4404702**

(43) Veröffentlichungstag der Anmeldung:
**30.08.95 Patentblatt 95/35**

(84) Benannte Vertragsstaaten:
**CH DE ES FR GB GR IT LI NL PT**

(71) Anmelder: **Hoechst Schering AgrEvo GmbH
Miraustrasse 54
D-13509 Berlin (DE)**

(72) Erfinder: **Morales, Esperanza Dr.
Calle 226 Nr. 47-33
Bogota (CO)**
Erfinder: **Röchling, Hans Dr.
Geierfeld 25
D-65812 Bad Soden (DE)**

(54) **Wasserdispergierbare Granulate auf der Basis lebender Organismen.**

(57) Aufgabe dieser Erfindung ist die Bereitstellung von Spritzformulierungen mit lebenden Organismen, welche als Schädlingsbekämpfungs- oder Pflanzenbehandlungsmittel verwendet werden können und deren Lagerstabilität bei Zimmertemperatur im Vergleich zu bisher bekannten entsprechenden Formulierungen wesentlich erhöht ist. Außerdem soll die Spritzformulierung besser handhabbar sein, also z.B. frei fließend, staubarm und gut dosierbar, um eine verbesserte Anwenderfreundlichkeit zu erzielen.

Die Aufgabe wird durch die Herstellung eines besonderen, wasserdispergierbaren Granulates gelöst.

Die erfindungsgemäßen Granulate enthalten:

a) 5 bis 80 Gew.-% Sporen oder Wirkeinheiten einer oder mehrerer Organismen, die als Schädlingsbekämpfungs- oder Pflanzenbehandlungsmittel wirken,

b) 5 bis 60 Gew.-%, eines oder mehrerer geeigneter Netz- und Dispergiermittel,

c) 2 bis 50 Gew.-% mindestens einer die Austrocknung verhindernden protektiven Substanz,

d) 5 bis 70 Gew.-% Magnesium- oder Aluminium-Silikate,

e) 5 bis 20 Gew.-% mindestens einer gegen UV-Strahlung schützenden Substanz und

f) einen Restwassergehalt von 2-10%.

Die vorliegende Erfindung betrifft neue Pflanzenschutzmittel, welche lebende Organismen enthalten und als in wäßrigen Medien dispergierbare Granulate formuliert werden.

Es ist bekannt, daß bestimmte Mikrooganismen, wie z.B. Bakterien, Viren und Pilze, oder auch Nematoden, gegenüber Schädlingen pathogen sein können oder zur Pflanzenbehandlung geeignet sind. Es ist ferner bekannt, daß bei der praktischen Verwendung von solchen lebenden Organismen die Bereitstellung geeigneter Formulierungen nicht unproblematisch ist. Bei der Formulierung verlieren große Anteile der Mikroorganismen ihre Lebensfähigkeit oder bei Raumtemperaturen innerhalb von wenigen Tagen ihre Aktivität. Daher ist es schwierig Formulierungen herzustellen, deren Wirkung den Anforderungen für eine landwirtschaftliche Verwendung genügen.

Die Anwendung von Mikroorganismen im Pflanzenschutz wird durch den Mangel an einer Formulierung begrenzt, die eine Stabilität der Mikroorganismen und eine Homogenität des Produktes gewährleistet. In der Literatur werden Formulierungen erwähnt, die das pulverförmige Produkt in Staubform oder wäßriger Dispersion vorsehen. Weitere Formulierungen sind ölige Dispersionen und Streugranulate.

Die Veröffentlichung von Pereira und Roberts (1991) bezieht sich auf ein pulverförmiges Trockenmyzel von insektenpathogenen Pilzen eingekapselt in Alginat oder Maisstärke. Diese Art der Präparate kann man als Streugranulat für Bodenschädlinge verwenden. Die Stabilität des Produktes variiert mit der Pilzart, der Lagerungstemperatur und der Art der Enkapsulierung.

In der französischen Patentschrift FR 2494717 werden Pflanzenschutzprodukte beschrieben, die aus widerstandsfähigen Sporen entomophthoraler Pilze bestehen und als Spritzpulver oder zum Zerstäuben verwendet werden. Die Sporen sind dabei von Kreide umhüllt. Die Stabilität des Produktes wird für zwei Monate bei einer Lagertemperatur von 2 bis 7°C gewährleistet.

Die Patentschrift WO 92/20229 erwähnt die Anwendung von Biopolymeren als Träger, Umhüllung und Nährmittel von Mikroorganismen, die als Pestizide eingesetzt werden. Die Autoren machen keine Aussagen über die Lagerstabilität, Homogenität und andere Faktoren, wie Dispergierbarkeit oder Schwebefähigkeit aus denen man auf die Wirtschaftlichkeit solcher Produkte schließen könnte.

Die französische Patentveröffentlichung FR 2394606 bezieht sich auf die Konservierung und den Schutz von Mikroorganismen mittels Kreide. Ein Endprodukt, das zur Anwendung in der Landwirtschaft kommen könnte, wird nicht beschrieben.

Die Patentschrift US 4,530,834 erwähnt die Gewinnung von benetzbarem Pulver aus Trockenmyzelen von entomophathogene Pilzen, die mit Schutzsubstanzen behandelt worden waren. Das Endprodukt muß bei 4°C gelagert werden.

Die europäische Patentanmeldung EP- 0 406 103 beschreibt das Wachstum von Mikroorganismen auf einem granuliertem Träger, der im Fermentationsmedium unlöslich ist. Die Korngröße des Granulates liegt zwischen 0,5 und 2,0 mm. Das Produkt wird als Streugranulat angewendet.

In dem Patent EP- 0 268 177 wird ein trägerfreies Zellgranulat von myzelbildungsfähigen Mikroorganismen beschrieben. Diese Granulate sind aus gewebeartigen verwachsenen Mikroorganismenzellen zusammengesetzt und enthalten keine Trägermaterialien. Diese Mikroorganismen müssen Zellaggregationen und Zellgranulate bilden können. Man verwendet sie zur Bekämpfung von Schädlingen, die im Boden, auf dem Boden oder in der Nähe des Bodens vorkommen. Die Granulate dispergieren nicht im Wasser. In diesen und anderen Formulierungen aus trockenem Myzel kennt man nicht die Anzahl der infektiösen Konidiosporen, da sie sich erst nach der Anwendung bilden, in Abhängigkeit der unterschiedlichen Mikroumweltbedingungen.

Auch wenn das Produkt die besten Wachstumsbedingungen vorfinden würde, zeigt sich eine Verzögerung in der Wirksamkeit, bedingt durch die benötigte Zeit der Sporenbildung. Während dieser Zeit können, abhängig von der Formulierung, die Produkte von Tieren gefressen werden. Auf diese Weise steht ein Teil des Präparates nicht mehr zur Sporenbildung zur Verfügung.

Das europäische Patent EP- 0 180 743 erwähnt Flüssigpräparate von Mikroorganismen, die mit einer Schutzschicht umhüllt sind und als Suspension in Öl vorliegen. Diese Produkte sind vorzugsweise für den Veterinärbereich gedacht. Es sind bei Zimmertemperatur lagerfähige Präparate. Die Autoren nehmen keinen Bezug auf die Homogenität der Emulsion in der landwirtschaftlichen Anwendung. Eine Publikation von Wright und Chandler (1992) beschreibt die Entwicklung und Bewertung eines Pilz-Präparates von Beauveria bassiana in Öl, gemischt mit zwei anderen biologisch aktiven Komponenten: ein synthetisches Pheromon und ein Fraßsubstrat bzw. Phagostimulanz. Über die Stabilität des Produktes in Abhängigkeit von der Lagerzeit und Lagertemperatur sind keine experimentellen Werte zu erfahren.

Der Umgang mit Dispersionen bereitet einige Probleme. So können Dispersionen bei langer Lagerzeit schwer aufschüttelbare Sedimente bilden, eine entsprechende Inhomogenität des Produktes bewirken bzw. unregelmäßige Wirkung bei der Anwendung herbeiführen.

2

Die Anwendung von Spritzpulver-Formulierungen hat den Nachteil, daß dabei Staub entsteht, der der Gesundheit des Anwenders schaden kann.

Außerdem werden Mikroorganismen von grenzflächenaktiven Substanzen, Lösemitteln, Füllstoffen, Additiven und anderen Formulierungsstoffen häufig deaktiviert, gehemmt oder sogar getötet.

Ziel der vorliegenden Erfindung war es, lebende Organismen enthaltende Spritz-Formulierungen zur Verfügung zu stellen, welche als Schädlingsbekämpfungs- oder Pflanzenbehandlungsmittel verwendet werden und deren Lagerstabilität bei Zimmertemperatur im Vergleich zu bisher bekannten entsprechenden Formulierungen wesentlich erhöht sein sollte. Außerdem sollte bei sehr guter Handhabbarkeit, d. h. frei fließend, staubarm und gut dosierbar, eine bessere Anwenderfreundlichkeit gegeben sein.

Überraschenderweise zeigte es sich, daß die angestrebten Ziele durch die Herstellung eines besonderen wasserdispergierbaren Granulates erreicht werden können.

Die erfindungsgemäßen Granulate enthalten:

a) 5 bis 80 Gew.-% Sporen oder Wirkeinheiten einer oder mehrerer Organismen, die als Schädlingsbekämpfungs- oder Pflanzenbehandlungsmittel wirken,

b) 5 bis 60 Gew.-%, eines oder mehrerer geeigneter Netz- und Dispergiermittel,

c) 2 bis 50 Gew.-% mindestens einer die Austrocknung verhindernden protektiven Substanz,

d) 5 bis 70 Gew.-% Magnesium- oder Aluminium-Silikate,

e) 5 bis 20 Gew.-% mindestens einer gegen UV-Strahlung schützenden Substanz und

f) einen Restwassergehalt von 2-10%.

Vorzugsweise hat das erfindungsgemäße Mittel die folgenden Zusamensetzung:

a) 20 bis 50 Gew.-% Sporen oder Wirkeinheiten ein oder mehrerer Mikroorganismen, die als Schädlingsbekämpfungs- oder Pflanzenbehandlungsmittel wirken,

b) 10 bis 40 Gew.-%, eines oder mehrerer geeigneter Netz- und Dispergiermittel,

c) als protektive Substanz 5 bis 20 Gew.-%, pflanzliches Öl, Mineralöl, Glycerin, Natriumalginat oder Natriumglutamat,

d) 10 bis 50 Gew.-% Magnesium- oder Aluminium-Silikate,

e) 5 bis 20 Gew.-% Titandioxid oder Zinkoxid als UV-protektive Substanz und

f) einen Restwassergehalt von 4-10%.

Daneben enthalten die genannten Wirkstoffformulierungen gegebenenfalls die jeweils üblichen Haft-, Netz-, Dispergier-, Emulgier-, Penetrations-, Lösungsmittel, Füll- oder Trägerstoffe.

Bevorzugte Netz- und Dispergiermittel sind beispielsweise Natrium-Oleylmethyltaurid(®Arkopon T, ®Hostapon T), methoxyligninsulfonsaures Natrium (®Vanispesse CB), ligninsulfonsaures Natrium (®Bosserperse), Natriumsalz einer Dinaphthylmethan-Disulfonsäure (®Dispersogen A, ®Tamol NNO), Natriumsalz der Dibutylnaphthalinsulfonsäure (®Fernil DB, ®Geropon NK), Natriumpolycarboxylat (®Sopropon T36) langkettige Olefinsulfonate (Hostapur OSB), Isotridecanolpolyglykolether (®Genapol X-Marten) und Polyoxyethylenesorbitan Monolaurate (®Tween 20).

Weitere als protektive Substanzen einsetzbare Verbindungen sind Glucose, Fructose, Lactose oder Saccharose, hochreine Cellulose und antioxidative Stoffe, wie z. B. Ascorbinsäure. Diese Verbindungen werden unter anderem eingesetzt, um eine Austrocknung der Mikroorganismen zu verhindern. Als protektive Substanzen können daher auch andere Verbindungen eingesetzt werden, die diesen Effekt verursachen.

Als Füllstoffe werden vorzugsweise hochgereinigte Magnesium- und Aluminium-Silikate, wie z. B. ®Bentone EW, ®Bentonite 7c, feingemahlene Kaoline und Tone, ®Perlite, ®Santentone, Kaolin 1777, Attapulgus Clay Produkte wie ®Attaclay, ®Attacote, ®Attagel, ®Clarsol FgN-FR4 oder Kieselgur zur Herstellung der erfindungsgemäßen Mittel eingesetzt.

Zur Herstellung der erfindungsgemäßen Mittel können auch Mischungen der jeweils unter den Punkten a - e genannten Verbindungen zur Anwendung kommen. Von besonderem Interesse ist die Verwendung einer Kombination mehrerer protektiver Substanzen, wie z. B. eine Mischung aus Glycerin, Natriumalginat und Natriumglutamat.

Weiterhin können die Granulate Entschäumer aus Silikonbasis, z. B. Entschäumer ®SE2, Emulgatoren auf Rizinusölbasis wie ®Emulogen EL und synthetischer Schichtsilikate wie ®SKS20 enthalten. Bei allen genannten Formulierungshilfsstoffen handelt es sich um hinreichend bekannte Substanzen, die in der Fachliteratur beschrieben sind.

Im Rahmen der vorliegenden Erfindung umfaßt der Begriff Organismen einzellige und mehrzellige Lebewesen aus dem Reich der Pro- und Eukaryota, insbesondere die Abteilung der Schizophyta (Bakterien), die Abteilung der Mycophyta (Pilze) und die Klasse der Nematoden. Die Klasse der Nematoden (Fadenwürmer) wird der Unterabteilung der Bilateria und dem Stamm der Nemathelminthen (Rundwürmer) zugeordnet. Der Begriff umfaßt jedoch auch Viren, die als nicht zelluläre Teilchen den Organismen nur bedingt zuzuordnen sind.

Der nicht taxonomische Begriff Mikroorganismen soll in diesem Zusammenhang für die früher unter den Kollektivnamen Protisten (Erstlinge, Urwesen) zusammengefaßten Lebewesen stehen. Er umfaßt Organismen, die sich durch eine geringe morphologische Differenzierung auszeichnen und überwiegend einzellig sind.

Zur Herstellung der erfindungsgemäßen Granulate werden vorzugsweise fungizide, herbizide, nemathopathogene und entomopathogene Mikroorganismen, insbesondere Pilze aus der Klasse der Deuteromycetes, eingesetzt. Von speziellem Interesse ist der Einsatz von Pilzen der Gattung Beauveria, insbesondere der Art Beauveria bassiana.

Ferner bietet diese Art von biologischen Formulierungen, wegen ihrer chemischen und physikalischen Stabilität, mehr Möglichkeiten zur Herstellung von Koformulierungen mit anderen biologischen oder chemischen Pflanzenschutzmitteln.

Die erfindungsgemäßen Granulate können daher neben den Organismen weitere Schädlingsbekämpfungsmittel (z. B. chemische Fungizide, Insektizide oder Herbizide) als Koformulierung enthalten.

Gegenstand der Erfindung ist auch die Verwendung der erfindungsgemäßen wasserdispergierbaren Granulate als Pflanzenschutzmittel oder Pflanzenbehandlungsmittel. Die erfindungsgemäßen Granulate werden bei der Anwendung analog zu Spritzpulvern und Flüssigformulierungen mit Wasser zu einer Spritzbrühe verdünnt und als solche auf die Pflanzen oder deren Anbauflächen ausgebracht.

Die erfindungsgemäßen Granulate eignen sich zur Bekämpfung von Schädlingen, insbesondere Insekten und Spinnentieren, die in der Landwirtschaft vorkommen.

Die erfindungsgemäßen Mittel weisen eine ausgezeichnete insektizide Wirksamkeit gegen ein breites Spektrum wirtschaftlich wichtiger Schädlinge auf. Im einzelnen seien beispielhaft einige Vertreter der Schädlinge genannt, die durch die erfindungsgemäßen Mittel kontrolliert werden können, ohne daß durch die Nennung eine Beschränkung auf bestimmte Arten erfolgen soll.

Aus der Ordnung der Isopoda z.B. Oniscus asellus, Armadium vulgare, Porcellio scaber. Aus der Ordnung der Diplopoda z.B. Blaniulus guttulatus. Aus der Ordnung der Chilopoda z.B. Geophilus carpophagus, Scutigera spec. Aus der Ordnung der Symphyla z.B. Scutigerella immaculata. Aus der Ordnung der Thysanura z.B. Lepisma saccharina. Aus der Ordnung der Collembola z.B. Onychiurus armatus. Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria. Aus der Ordnung der Dermaptera z.B. Forficula auricularia. Aus der Ordnung der Isoptera z.B. Reculitermes spp. Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp. und Damalinea spp. Aus der Ordnung der Thysanoptera z.B. Hercinothrips femoralis und Thrips tabaci. Aus der Ordnung der Heteroptera z.B. Eurygaster spp., Dysdercus intermedius, Piesma quadrata, Cimex lectularius, Rhodnius prolixus und Triatoma spp. Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp.,

Scotinophora coarctata, Drasicha mangiferae, Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. und Psylla spp.

Aus der Ordnung der Heteroptera, z.B. Lygus spp., Nezara viridula, Drosicha mangiferae und Euschistus spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Diathrea sacharalis, Bucculactrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Ostrinia spp., Perileucoptera coffeella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Dendrolimus spp., Laspeyresia pomonella.

Aus der Ordnung der Coleoptera z.B. Anobium punctatum, Hypothemenus hampei, Pityogenes chalcographus, Cyrtomon luridus, Xyloterus lineatus, Ips typographus, Rhizopertha dominica, Bruchidius obtectus, Acenthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Sitona lineatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Brontispa longissima, Tenebrio molitor, Agriotes spp., Conoderus spp., Melolontha melolontha, Sphenophorus-Levis, Amphimallon solstitialis und Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hypobosca spp., Glossina morsitans, Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae und Tipula paludosa.

Aus der Ordnung der Siphonaptera z.B. Xenopsylla cheopis, Ceratophyllus spp. Aus der Ordnung der Arachnida z.B. Scorpio maurus und Latrodectus mactans. Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Insbesondere eignet sich das erfindungsgemäße Granulat zur Bekämpfung von sensiblen und resistenten Heliothis spp., Anthonomus spp., Hypothememus hampei, Spodoptera spp., Nephotettix spp., Trichoplusia spp, Leptinotara decemlineata und anderen fressenden und saugenden Insekten oder Spinnmilben (Weiße Fliege, Lepidoptera-Larven).

Die erfindungsgemäßen biologischen Pflanzenschutzmittel sind dadurch gekennzeichnet, daß sie eine definierte Anzahl von lebenden und aktiven Wirkeinheiten (z. B. Konidien oder Sporen) und eine hohe Lagerstabilität bei Raumtemperaturen aufweisen und dadurch eine standardisierte Wirksamkeit besitzen. Sie besitzen eine gute mechanische Stabilität, eine definierte Korngröße, sind frei fließend, staubarm und gut dosierbar, was ihre Handhabbarkeit bei der Anwendung begünstigt.

Die Mittel sind außerdem als wasserdispergierbare Granulate in Wasser gut benetzbar, zerfallen sehr schnell und bilden eine Suspension mit guter Schwebefähigkeit.

Die bisher bekannten Formulierungen haben den Nachteil, daß relativ große Mengen der gegen UV-Strahlung schützenden Substanzen eingesetzt werden müssen, um den Verlust zu kompensieren, der durch die Auflösung der Formulierung in Wasser verursacht wird. Werden geringere Mengen der protektiven Substanzen eingesetzt, muß man in Kauf nehmen, daß der UV-Schutz nach der Verdünnung der Mittel in Wasser nicht mehr gewährleistet ist.

Dagegen haben die erfindungsgemäßen Mittel den Vorteil, daß aufgrund der besonderen Formulierung auch nach der Auflösung des Produktes in Wasser ein optimaler UV-Schutz gewährleistet werden kann.

Ein großer Vorteil der erfindungsgemäßen Mittel beruht also darauf, daß man die aktiven lebendigen Materialien mit kleineren Mengen von protektiv wirkenden Substanzen sehr gezielt behandeln kann und ihre Wirkung auch bei einer starken Verdünnung mit Wasser nicht reduziert wird. Diese Tatsache unterscheidet diesen Formulierungstyp von allen anderen bis jetzt bekannten Formulierungen von Mikroorganismen.

Folgende Beispiele dienen zur Erläuterung der Erfindung, ohne daß diese darauf beschränkt wäre. Sofern keine anderen Angaben gemacht werden, beziehen sich die %-Angaben auf Gewichtsprozente:

Herstellungsbeispiele der Formulierungen

Zur technischen Herstellung von wasserdispergierbaren Granulaten stehen zahlreiche Verfahren zur Verfügung: Sie können z. B. in einem schnell rotierenden Teller oder Trommelgranulator hergestellt werden. Sie können auch in einem Kneter-Extruder oder in einem Wirbelbett angefertigt werden. Eine nährere Beschreibung der Herstellungsprozesse findet man z. B. bei: H. B. Ries "Granuliertechnik und Granuliergeräte" in Aufbereitungstechnik Nr. 3 (1970); M. Rosch und R. Probst in Verfahrenstechnik 9 (1975); US-A 3920442; GB-A 1401304; EP-A 0026918; EP-A 0141436 und EP-A 0141437.

Zur Herstellung der wasserdispergierbaren Granulate wird zunächst feines Aluminiumsilikat bzw. Magnesium-Aluminium-Silikat und/oder synthetisches Schichtsilikat mit festem Netz- und Dispergiermittel gemischt. Dazu können auch einige feste protektiv wirkende Substanzen zugemischt werden. Die so erhaltene Pulvermischung wird in ein Wirbelbett oder in einen Kneter vorgelegt und durch Besprühen mit einer wäßrigen Dispersion von Pilz granuliert.

Für kleine Mengen kann ein Laborwirbelbettgranulierter, wie z. B. Büchi 710, oder ein Kneter, z.B. der SIGMA LUK der Firma Werner & Pfleiderer, und ein Kolbenextruder benutzt werden.

Zur Beurteilung der Granulate werden die Dispergierfähigkeit, die Schwebefähigkeit und der Naßsiebrückstand bewertet.

Die spontane Dispergierfähigkeit der Granulatformulierung wird nach einer Bewertungsskala von 1 bis 4 beurteilt. Zu diesem Zweck wird zunächst 1 g der Granulats in einem mit standardisiertem Wasser (30°C, 342 ppm $CaCO_3$ Wasserhärte) gefüllten 1 l-Meßzylinder gegeben. Nach 1 Minute wird der Meßzylinder langsam um 180°C gedreht und wieder in die Ausgangslage zurückgebracht. Dieser Vorgang wird dreimal wiederholt. Die Bewertung erfolgt nach folgendem Schema:

1. Alle Granulatkörner sind dispergiert. Falls nicht dispergierte Granulatkörner vorhanden sind, wird 2 Minuten nach Versuchsbeginn nochmals dreimal wie beschrieben umgeschüttelt und wie folgt bewertet:

2. Das Granulat ist nun vollständig dispergiert.

3. Reste des Granulats sind nicht dispergiert.

4. Das Granulat ist zum überwiegenden Teil nicht dispergiert.

Die Schwebefähigkeit wurde als diejenige Menge des Präparats (Gew.-%) angegeben, die sich nach Ablauf einer Sedimentationszeit von 30 Minuten in den oberen neun Zehntel Volumenteilen einer Suspension befindet (siehe CIPAC-Handbook Vol. 1 (1970), S. 861).

Als Naßsiebrückstand wird die Substanzmenge bezeichnet, die nach 10 Minuten Spülen mit einer definierten Wassermenge auf einem Sieb von 250 μm bzw. 71 μm zurückbleibt. Eine Beschreibung der Methode ist bei "Richtlinien für die amtliche Prüfung von Pflanzenschutzmitteln, Teil III, 2-1/1 (August 1988) der Biologischen Bundesanstalt Braunschweig" gegeben.

Beispiel 1: Extruder-WG von Beauveria bassiania

A. Herstellung einer wäßrigen Beauveria-Dispersion:

|  | Gew.-% |
|---|---|
| Pilzsporen | 25 |
| Genapol X-060 | 2,5 |
| Glycerin | 1,5 |
| Na-Glutamat protektive Substanzen | 0,5 |
| Na-Alginat | 0,5 |
| Wasser | 70 |
|  | 100,0 |

Die Komponenten werden durch Rühren gemischt, bis eine feine, hoch konzentrierte, homogene Dispersion entstanden ist.

B. Die so hergestellte Dispersion wird unter ständigem Kneten auf eine Pulvermischung gesprüht. Das Gewichtsverhältnis von Disperion zu Pulvermischung ist 8:7.

Die verwendete Pulvermischung hat folgende Zusammensetzung:

|  | Gew.-% |
|---|---|
| Saccharose | 7,1 |
| Bentone EW | 2,8 |
| Bentonite 7C | 28,5 |
| Tecnocel | 11,5 |
| Kieselgur | 28,5 |
| Saponit SKS 2C | 1,5 |
| Vanisperse CB | 11,5 |
| Geropon NK | 2,8 |
| Hostapon T | 5,8 |
|  | 100,0 |

C. Mit der so hergestellten Paste wird das Granulat erzeugt und bei 30°C Produkttemperatur bis auf 6 % Restfeuchtigkeit im Wirbelbetttrockner getrocknet.

Die Endzusammensetzung des wasserdispergierbaren Granulats beträgt:

|  | Gew.-% |
|---|---|
| Pilzsporen | 20 |
| Genapol X 060 | 2 |
| Glycerin | 1,2 |
| Na-Glutamat | 0,4 |
| Na-Alginat | 0,4 |
| Saccharose | 5 |
| Bentone EW | 2 |
| Bentonite 7C | 20 |
| Kieselgur | 20 |
| Tecnocel | 8 |
| Vanisperse CB | 8 |
| Geropon NK | 2 |
| Hostapon T | 4 |
| Saponit SKS 2CV | 1 |
| Wasser | 6 |
|  | 100,0 |

Die spontane Dispergierfähigkeit ist 2 (5 Minuten Dispergierzeit) nach einer Bewertungsskala von 1 bis 4. Die Schwebefähigkeit ist 87 %. Der Naßrückstand beträgt bei einer Siebung von 71 $\mu$m 0,7 %; bei Sieben von 250 $\mu$m wurde kein Rückstand festgestellt.

Beispiel 2: Wirbelbett-WDG von Beauveria bassiana

A. Herstellung der wäßrigen Beauveria Dispersion:

|  | Gew.-% |
|---|---|
| Pilzsporen | 10 |
| Genapol X-060 | 1 |
| Glycerin | 0,6 |
| Na-Glutamat | 0,2 |
| Na-Alginat | 0,2 |
| Sachharose | 2,5 |
| Wasser | 85,5 |
|  | 100,0 |

Die Komponenten werden gerührt, bis eine feine homogene Dispersion entstanden ist.
B. Die Dispersion wird auf eine im Wirbelbett vorgelegte Pulvermischung bei 30°C Produkttemperatur gesprüht und anschließend getrocknet. Das Gewichtsverhältnis von Dispersion zu Pulvermischung ist 20:6,5.
Die Pulvermischung hat die folgende Zusammensetzung:

|  | Gew.-% |
|---|---|
| Clarsol GFN-FR4 | 30,5 |
| Kaolin 1777 | 23,5 |
| Kieselgur | 23,5 |
| Vanisperse CB | 12 |
| Geropon NK | 3 |
| Hostapon T | 6 |
| Saponit SKS 20 | 1,5 |
|  | 100,0 |

C. Die Endzusammensetzung des wasserdispergierbaren Granulats beträgt:

7

|  | Gew.-% |
|---|---|
| Pilzsporen | 20 |
| Genapol X-060 | 2 |
| Glycerin | 1,2 |
| Na-Glutamat | 0,4 |
| Na-Alginat | 0,4 |
| Saccharose | 5 |
| Clarsol FGN-FR4 | 20 |
| Kaolin 1777 | 15 |
| Kieselgur | 15 |
| Vanisperse CB | 8 |
| Geropon NK | 2 |
| Hostapon T | 4 |
| Saponit SKS 20 | 1 |
| Wasser | 6 |
|  | 100,0 |

Die spontane Dispergierfähigkeit dieses Graulats ist 1 nach einer Bewertungsskala von 1 bis 4. Die Schwebefähigkeit ist 97 %. Der Naßsiebrückstand beträgt bei Sieben von 71 μm 0,3 %, bei Sieben von 250 μm werden keine Rückstand beobachtet.

Beispiel 3: Ölbeschichtung von Beauveria-Sporen im Extruder (WDG)

A. Herstellung der Suspoemulsion

|  | Gew.-% |
|---|---|
| Sporen | 25 |
| Genapol X-060 | 2,5 |
| Öl | 3,7 |
| Emulsogen EL-400 | 0,4 |
| Wasser | 68,4 |
|  | 100,0 |

B. Diese hoch konzentrierte Suspoemulsion wird auf eine im Kneter vorgelegte Pulvermischung im Gewichtsverhältnis 8:6,9 gesprüht.
Die Pulvermischung hat die folgende Zusammensetzung:

|  | Gew.-% |
|---|---|
| Bentone EW | 7,1 |
| Bentonite | 28,5 |
| Kieselgur | 28,5 |
| Tecnocel | 14,3 |
| Vanisperse CB | 11,5 |
| Geropon NK | 2,8 |
| Hostapon T | 5,8 |
| Saponit SKS 20 | 1,5 |
|  | 100,0 |

Das Granulat wird in einem Extruder produziert und im Wirbelbetttrockner bei 30°C Produkttemperatur getrocknet.
C. Die Endzusammensetzung des WDG

|  | Gew.-% |
|---|---|
| Pilzsporen | 20 |
| Genapol X-060 | 2 |
| Öl | 3 |
| Emulsogen EL-400 | 0,3 |
| Bentone EW | 3,7 |
| Bentonite | 20 |
| Kieselgur | 20 |
| Tecnocel | 10 |
| Vanisperse CB | 8 |
| Geropon NK | 2 |
| Hostapon T | 4 |
| Saponit SKS 20 | 1 |
| Wasser | 6 |
|  | 100,0 |

Die spontane Dispergierfähigkeit ist 2. Die Schwebefähigkeit beträgt 89 %. Der Naßsiebrückstand liegt bei 0,4/0 mit Sieben von 71 $\mu$m/250$\mu$m.

Beispiel 4: UV-Schutz von Beauveria bassiana-Sporen im Extruder-WDG durch $TiO_2$

A. Herstellung der Supoemulsion:

|  | Gew.-% |
|---|---|
| Pilzsporen | 20 |
| Genapol X-060 | 2,5 |
| Öl (Maisöl) | 5 |
| Emulsogen EL-9,5 | 0,5 |
| $TiO_2$ | 0,5 |
| Wasser | 66,5 |
|  | 100,0 |

B. Diese Suspoemulsion wird auf eine im Kneter vorgelegte Pulvermischung im Gewichtsverhältnis Dispersion zu Pulvermischung von 8:6,7 gesprüht.

Die Pulvermischung hat die gleiche Zusammensetzung wie bei der Ölbeschichtung. Die Endzusammensetzung des WDG ist:

|  | Gew.-% |
|---|---|
| Pilzsporen | 20 |
| Genapol X-060 | 2 |
| Öl | 5 |
| Emulsogen EL-9,5 | 0,5 |
| $TiO_2$ | 0,5 |
| Bentone EW | 3 |
| Aluminiumsilikate | 40 |
| Cellulose | 8 |
| Vanisperse CB | 8 |
| Geropon NK | 2 |
| Hostapon T | 4 |
| Saponit | 1 |
| Wasser | 6 |
|  | 100,0 |

9

Die spontane Dispergierfähigkeit ist 2. Die Schwebefähigkeit beträgt 90 %. Der Naßsiebrückstand liegt bei 0,4/0 mit Sieben von 71 $\mu$m/250$\mu$m.

Beispiel 5: UV-Schutz von Beauveria bassiana-Sporen im Wirbelbett-WDG durch $TiO_2$ und ZnO.

A. Herstellung der Suspoemulsion:

|  | Gew.-% |
|---|---|
| Pilzsporen | 10 |
| Genapol X-060 | 1,75 |
| Öl (Erdnußöl) | 2,5 |
| Emulsogen EL-9,5 | 0,25 |
| $TiO_2$ | 0,25 |
| ZnO | 0,25 |

Die Komponenten werden gerührt, bis eine feine homogene Dispersion entstanden ist.

B. Die Dispersion wird auf eine im Wirbelbett vorgelegte Pulvermischung bei 30°C Produkttemperatur gesprüht und getrocknet. Das Gewichtsverhältnis von Dispersion zu Pulvermischung ist 20:7. Die Endzusammensetzung des wasserdispergierbaren Granulats beträgt:

|  | Gew.-% |
|---|---|
| Pilzsporen | 20 |
| Genapol X-060 | 3,5 |
| Öl (Erdnußöl) | 5 |
| Emulsogen EL-9,5 | 0,5 |
| $TiO_2$ | 0,5 |
| ZnO | 0,5 |
| Clarsol FGN-FR4 | 20 |
| Kaolin 1777 | 15 |
| Kieselgur | 10 |
| Benton EW | 5 |
| Saponit SKS 20 | 1 |
| Vanisperse CB | 8 |
| Geropon NK | 2 |
| Hostapon T | 3 |
| Wasser | 6 |
|  | 100,0 |

Die spontane Dispergierfähigkeit dieses Granulats ist 1, die Schwebefähigkeit 95 % und der Naßsiebrückstand 0,3 %/0 bei Sieben von 71/250 $\mu$m.

**Patentansprüche**

1. Wasserdispergierbare Graulate, dadurch gekennzeichnet, daß sie
   a) 1 bis 80 Gew.-% Sporen oder Wirkeinheiten einer oder mehrerer Organismen, die als Schädlingsbekämpfungs- oder Pflanzenbehandlungsmittel wirken,
   b) 5 bis 60 Gew.-%, eines oder mehrerer geeigneter Netz- und Dispergiermittel,
   c) 2 bis 50 Gew.-% mindestens einer die Austrocknung verhindernden protektiven Substanz,
   d) 5 bis 70 Gew.-% Magnesium- oder Aluminium-Silikate,
   e) 5 bis 20 Gew.-% mindestens einer gegen UV-Strahlung schützenden Substanz und
   f) einen Restwassergehalt von 2-10% enthalten.

2. Wasserdispergierbare Graulate, gemäß Anspruch 1, die
   a) 20 bis 50 Gew.-% Sporen oder Wirkeinheiten ein oder mehrerer Mikroorganismen, die als Schädlingsbekämpfungs- oder Pflanzenbehandlungsmittel wirken,

b) 10 bis 40 Gew.-%, eines oder mehrerer geeigneter Netz- und Dispergiermittel,

c) als protektive Substanz 5 bis 20 Gew.-%, pflanzliches Öl, Mineralöl, Glycerin, Natriumalginat oder Natriumglutamat,

d) 10 bis 50 Gew.-% Magnesium- oder Aluminium-Silikate,

e) 5 bis 20 Gew.-% Titandioxid oder Zinkoxid als UV-protektive Substanz und

f) einen Restwassergehalt von 4-10% enthalten.

3. Granulate gemäß Anspruch 1 oder 2, dadurch gekennzeichnet, daß sie 1 bis 80 Gew.-% Wirkstoffe neben üblichen Formulierungshilfsmitteln enthalten.

4. Granulate gemäß einem oder mehreren der Ansprüche 1 bis 3, dadurch gekennzeichnet, daß sie Pilze der Klasse der Deuteromycetes enthalten.

5. Granulate gemäß einem oder mehreren der Ansprüche 1 bis 4, die Pilze der Gattung Beauveria enthalten.

6. Granulate gemäß einem oder mehreren der Ansprüche 1 bis 4, die Pilze der Art Beauveria basssiana enthalten.

7. Verwendung der Granulate gemäß einem oder mehreren der Ansprüche 1 bis 6 zur Bekämpfung von Schädlingen oder Behandlung von Pflanzen.

8. Verwendung der Granulate gemäß einem oder mehreren der Ansprüche 1 bis 6 zur Bekämpfung von Insekten.

9. Verfahren zur Bekämpfung von Schädlingen oder zur Behandlung von Pflanzen, dadurch gekennzeichnet, daß man die Mittel gemäß einem oder mehreren der Ansprüche 1 bis 6 auf die zu bekämpfenden Schädlinge oder die zu behandelnden Pflanzen aufträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 485 229 (SHELL)<br>* Ansprüche 1,3-6 *<br>* Seite 5, Zeile 3 - Zeile 7 *<br>--- | 1,3-9 | A01N25/14<br>A01N63/00<br>A01N63/04 |
| A | FR-A-2 358 105 (SANDOZ)<br>* Ansprüche 3,11-15 *<br>----- | 1-9 | |

| RECHERCHIERTE SACHGEBIETE (Int.Cl.6) |
|---|
| A01N |

Der vorliegende Recherchenbericht wurde für alle Patentansprüche erstellt

| Recherchenort | Abschlußdatum der Recherche | Prüfer |
|---|---|---|
| DEN HAAG | 15. Juni 1995 | Decorte, D |

EPO FORM 1503 03.82 (P04C03)